# EUROPEAN PATENT APPLICATION

(11) **EP 4 692 287 A1**
(43) Date of publication of application: **11.02.2026**
(21) Application number: 24784941.7
(22) Date of filing: 03.04.2024
(51) Int. Cl.: C10M 169/06, F16D 3/20, C10M 115/08, C10M 129/10, C10M 135/10, C10M 135/18, C10M 137/10, C10M 159/22, C10M 159/24, C10N 10/12, C10N 30/06, C10N 30/08, C10N 40/04, C10N 50/10

(54) **GREASE COMPOSITION FOR CONSTANT-VELOCITY JOINT, AND CONSTANT-VELOCITY JOINT HAVING SAME SEALED THEREIN**

(30) Priority: 03.04.2023 JP 2023060053
(71) Applicant: KYODO YUSHI CO., LTD., Fujisawa-shi, Kanagawa 251-8588 (JP)
(72) Inventor: TSUNODA Junpei, Fujisawa-shi, Kanagawa 251-8588 (JP)
(74) Representative: Cabinet Beau de Loménie
(86) International application number: PCT/JP2024/013812
(87) International publication number: WO 2024/210158

(57) **Abstract**

Provided is a grease composition for a constant-velocity joint having excellent durability due to exhibiting low friction characteristics even in a high-temperature environment. This grease composition for a constant-velocity joint comprises: (a) a diurea-based thickener represented by formula (1) R¹NH-CO-NH-C₆H₄-p-CH₂-C₆H₄-p-NH-CO-NHR² (R¹ and R² are independently a C8-C18 alkyl group); (b) a base oil; (c) molybdenum dithiocarbamate that is solid at 25°C; (d) at least one selected from the group consisting of molybdenum dithiocarbamate that is liquid at 25°C and molybdenum dithiophosphate that is liquid at 25°C; (e) Ca phenate; (f) Ca sulfonate; and (g) an organic sulfur-phosphorus compound, wherein (c):(d) = 1:2.6 to 1:5.2 (mass ratio), and the content of (g) is 0.05-0.30 mass% with respect to the total mass of the composition.

## Description

### Technical Field

The present invention relates to grease compositions for constant-velocity joint, and constant-velocity joint having the composition enclosed therein.

### Background Art

In automobiles, FF vehicles have become widespread from the viewpoint of lightweighting aimed at environmental measures for vehicles (CO₂ reduction) and securing living space. Constant-velocity joints (CVJs), essential for power transmission in FF vehicles, are used.

Since a CVJ is a device that transmits rotation between two shafts, which rotate while angled relative to each other, the components inside the joint perform complicated rolling/sliding motions. A plunging type CVJ additionally has a sliding mechanism in the axial direction, which causes sliding resistance in the axial direction due to friction of internal components. Excessive sliding resistance can cause vibration and noise.

Due to recent vehicle noise regulations and specification changes for vehicles resulting from demands for improved fuel efficiency, the plunging type constant-velocity joints are exposed to high-temperature environments, which can lead to deterioration in durability caused by decline in anti-flaking properties at high temperatures. The decline in flaking properties results from increased friction in high-temperature regions, and reducing friction under high-temperature environments is supposed to be the countermeasure.

To solve these problems, the CVJs themselves have undergone structural improvements. However, significant cost issues have led to the need for a grease with excellent durability under high-temperature conditions (a grease which maintains low friction under high temperatures).

As a grease with excellent anti-flaking properties at ambient temperature for CVJ, urea greases formulated with zinc dialkyldithiophosphate, sulfurized molybdenum dialkyldithiocarbamate, zinc dialkyldithiophosphate, and heterocyclic sulfur nitrogen compound (see PTL1), or urea greases formulated with molybdenum disulfide, molybdenum dithiocarbamate, calcium salt of petroleum sulfonic acids, sulfur-based extreme pressure agents, plant fats and oils, and zinc dialkyldithiocarbamate (see PTL2) are proposed.

Furthermore, urea greases formulated with calcium phenate, molybdenum dithiocarbamate, calcium sulfonate, and thiophosphate are proposed as a grease that considers not only durability but also vibration suppression performance at ambient temperature (see PTL3).

Therefore, although durability tests at ambient temperature have been conducted for grease compositions used in CVJs, it cannot be concluded that sufficient evaluation has been conducted regarding the durability issues at high temperatures, particularly the deterioration in durability caused by flaking or seizure resulting from high frictional coefficients.

### Citation List

### Patent Literatures

PTL1: JP 2008-297402 A
PTL2: JP 2010-90243 A
PTL3: JP 2004-323672 A

### Summary of Invention

### Technical Problem

Therefore, the objective of the present invention is to provide a grease composition for a constant-velocity joint that possesses an excellent durability resulting from exhibiting low frictional characteristics even in high-temperature environments, and to provide the constant-velocity joint in which the grease composition is enclosed.

### Solution to Problem

1. A grease composition for a constant-velocity joint, comprising
   (a) a diurea-based thickener represented by formula (1):

      R¹NH-CO-NH-C₆H₄-p-CH₂-C₆H₄-p-NH-CO-NHR² (1)

      wherein R¹ and R² are independently an alkyl group having 8 to 18 carbon atoms;
   (b) a base oil;
   (c) a molybdenum dithiocarbamate in the form of a solid at 25°C;
   (d) at least one member selected from the group consisting of a molybdenum dithiocarbamate in the form of a liquid at 25°C and a molybdenum dithiophosphate in the form of a liquid at 25°C;
   (e) a calcium phenate;
   (f) a calcium sulfonate; and
   (g) an organic sulfur phosphorus compound,
      wherein a ratio by mass of (c) and (d) is in the range of (c):(d)=1:2.6 to 1:5.2,
      and (g) is present in an amount of 0.05 to 0.30 mass % based on the total mass of the composition.
2. The grease composition for the constant-velocity joint of said option 1, wherein (d) is present in an amount of 1.95 to 3.90 mass % based on the total mass of the composition.
3. The grease composition for the constant-velocity joint of said option 1, wherein a ratio by mass of (e) and (f) is in the range of (e):(f)=1:1 to 1:3.
4. The grease composition for the constant-velocity joint of said option 1, wherein (f) is present in an amount of 2.0 to 6.0 mass % based on the total mass of the composition.
5. The grease composition for the constant-velocity joint of any one of said 1 to 4 which is used for a sliding type constant-velocity joint.
6. A sliding type tripod constant-velocity joint in which the grease composition for the constant-velocity joint of any one of said 1 to 4 is enclosed.

### Advantageous Effect of Invention

According to the present invention, a grease composition possessing excellent low-frictional characteristics even under high-temperature environments and an excellent durability can be provided. Furthermore, according to the present invention, a constant-velocity joint demonstrating an excellent high-temperature durability, in which the grease composition possessing excellent low-frictional characteristics even under high-temperature environment is enclosed, is provided.

### Description of Embodiments

### (a) Thickener

The Thickener of the present invention is a diurea-based thickener represented by the following formula (1).

R¹NH-CO-NH-C₆H₄-p-CH₂-C₆H₄-p-NH-CO-NHR² (1)

R¹ and R² in formula (1) are each independently an alkyl group having 8 to 18 carbon atoms.

The thickener significantly influences the fluidity of the grease. Since a sufficient amount of a grease needs to be supplied to a sliding portion in CVJ, the thickener is preferably an aliphatic diurea thickener which is easily softened by shear at an early stage, more preferably an aliphatic diurea thickener in which R¹ and R³ in formula (1) are alkyl groups having 8 or 18 carbon atoms, and even more preferably an aliphatic diurea thickener in which one of the R¹ or R² is an octyl group and the other is an octadecyl group.

The content of the thickener may be adjusted so that the penetration of the grease can be in the range of 310 to 340, which is the normal range for a grease for a constant-velocity joint. Specifically, the thickener is preferably present in an amount of 3 to 10 mass %, more preferably 4 to 9 mass %, even more preferably 5 to 8 mass %, based on the total mass of the composition. The term "penetration" used herein means the 60-stroke worked penetration, which is determined according to JIS K 2220. 7.

### (b) Base oil

The base oil, which can be used in the present invention, is not particularly limited. A mineral oil or a synthetic oil, or mixtures thereof can be used. The mineral oil includes a paraffin-based mineral oil and a naphthene-based mineral oil. The synthetic oil includes a hydrocarbon-based synthetic oil such as poly-α-olefin, and an ether-based synthetic oil represented by alkyl diphenyl ether. The synthetic oil can also be so-called biomass oil, which is manufactured from biological resources resulting from animals and plants as raw materials. For example, a biomass ester oil, which is synthesized from alcohols and various fatty acids derived from plant oils, and a biomass hydrocarbon oil, which is derived from plant oils such as palm oil, corn oil, and soybean oil, can be used. It is preferred to use the mineral oil as the base oil of the present invention from a cost perspective.

The kinematic viscosity at 100°C of the base oil of the present invention is preferably 5 to 25 mm²/s, more preferably 7 to 20 mm²/s, and even more preferably 9 to 15 mm²/s, in terms of the formation of oil film.

The base oil in the composition of the present invention is preferably present in an amount of 50 to 91 mass %, more preferably 60 to 90 mass %, and even more preferably 70 to 88 mass %, based on the total mass of the composition. The base oil is present in this range so that excellent inflow properties can be preserved.
(c) Molybdenum dithiocarbamate in the form of a solid at 25°C
(d) At least one member selected from the group consisting of a molybdenum dithiocarbamate in the form of a liquid at 25°C and a molybdenum dithiophosphate in the form of a liquid at 25°C

The molybdenum dithiocarbamate, which can be used as (C) or (d) of the present invention, is the general term for organometallic load-carrying additives in which molybdenum is used as a metal group. In general, it is widely used as an extreme pressure agent. An oil-insoluble molybdenum dithiocarbamate (i.e., solid at 25°C) and an oil-soluble molybdenum dithiocarbamate (i.e., liquid at 25°C) are present.

A preferred example of the molybdenum dithiocarbamate includes a compound represented by formula (2).

[R³R⁴N-CS-S]₂-Mo₂OₘSₙ (2)

R³ and R⁴ in formula (2) can be identical or different from each other, and each independently represent a linear or branched alkyl group having 1 to 24 carbon atoms, preferably 3 to 18 carbon atoms, wherein m is 0 to 3, n is 4 to 1, and m + n = 4.

A preferred example of the molybdenum dithiophosphate which can be used as (d) of the present invention includes an oil-soluble molybdenum dithiophosphate represented by formula (3).

[(R⁵O)(R⁶O)PS-S]₂-Mo₂Oₘ₁Sₙ₁ (3)

R⁵ and R⁶ in formula (3) is each independently an alkyl group having 1 to 24 carbon atoms or an aryl group having 6 to 30 carbon atoms, wherein m1 is 0 to 3, n1 is 4 to 1, and m1 + n1 = 4.

For component (c) and component (d), a ratio by mass of (c) and (d) is in the range of 1:2.6 to 1:5.2, preferably 1:2.8 to 5.0, more preferably 1:3.0 to 1:4.8, in terms of low frictional characteristics.

Component (c) is present in an amount of 0.4 to 1.5 mass %, preferably 0.5 to 1.3 mass %, and more preferably 0.6 to 1.1 mass %, based on the total mass of the composition, in terms of low frictional characteristics.

Component (d) is present in an amount of 1.95 to 3.90 mass %, preferably 2.10 to 3.75 mass %, more preferably 2.25 to 3.60 mass %, based on the total mass of the composition. Low fraction can be obtained in this range.

### (e) Calcium phenate

Both an over-based calcium phenate prepared using calcium carbonate and a neutral calcium phenate can be used as the calcium phenate in the present invention. The base number is 100 to 300 mgKOH/g, preferably 120 to 290 mgKOH/g, and more preferably 125 to 280 mgKOH/g, in terms of low friction. The base number in the present invention is the value determined according to JIS K 2501.

### (f) Calcium sulfonate

Both an over-based calcium sulfonate prepared using calcium carbonate and a neutral calcium sulfonate can be used as the calcium sulfonate in the present invention. The base number of the calcium sulfonate is preferably 0.5 to 50 mgKOH/g, and more preferably 0.5 to 35 mgKOH/g, in terms of low frictional properties.

A ratio of the content of components (e) and (f) is preferably (e) calcium phenate:(f) calcium sulfonate = 1:1 to 1:3 in terms of low frictional properties. The calcium sulfonate works as a detergent dispersant effectively. An excess amount of calcium sulfonate can lower the dropping point, which is an index of heat resistance for grease properties. Considering the dropping point that can ensure the heat resistance, a ratio of the content of components (e) and (f) is more preferably (e) calcium phenate:(f) calcium sulfonate = 1: 1 to 1:2.

Component (e) is preferably present in an amount of 0.7 to 6.0 mass %, and more preferably 1.0 to 5.0 mass %, based on the total mass of the composition, in terms of low friction.

Component (f) is preferably present in an amount of 2.0 to 6.0 mass %, based on the total mass of the composition, in terms of low friction. Considering the dropping point that can ensure the heat resistance, component (f) is more preferably present in an amount of 2.0 to 4.0 mass % based on the total mass of the composition, in terms of low friction.

The dropping point in the present invention is the value determined according to JIS K 2220 8.

### (g) Organic sulfur phosphorus compound

The organic sulfur phosphorus compound in the present invention preferably comprises 15 to 35 mass % of a sulfur component and 0.5 to 3.0 mass % of a phosphorus component, and it comprises a sulfurized olefin as the principal sulfur component and a phosphate ester amine salt as the principal phosphorus component, with no metal components present. Herein, the amount of the sulfur component is the value determined according to JIS K 2541, and the amount of the phosphorus component is the value determined according to ASTM D1091.

Component (g) exhibits excellent wear resistance and extreme pressure properties, whereas an excess amount of component (g) induces corrosion, which is a factor contributing to an increase in the coefficient of friction. In the present invention, component (g) is preferably present in an amount of 0.05 to 0.30 mass %, more preferably 0.08 to 0.25 mass %, and even more preferably 0.10 to 0.20 mass %, based on the total amount of the composition from the perspective of low friction.

The compositions of the present invention can comprise not only components (a) to (g) but also additives generally used for greases, if necessary.

Such additives include solid lubricants, oxidation inhibitors, rust inhibitors, extreme pressure agents, and oiliness agents. Solid lubricants include molybdenum disulfide, earthy graphite, flake graphite, carbon black, boron nitride, potassium borate, and calcium carbonate, and organic solid lubricants include melamine cyanurate, polytetrafluoroethylene, copper dithiocarbamate, iron dithiocarbamate, calcium stearate, calcium sebacate, aluminum stearate, aluminum sebacate, sodium stearate, sodium sebacate, lithium stearate, and lithium sebacate. Oxidation inhibitors include amine-based, phenol-based, quinoline-based, or sulfur-based oxidation inhibitors. Rust inhibitors include zinc-based, carboxylic acid-based, carboxylate salt (e.g., dibasic acid salts such as sodium sebacate), or amine-based rust inhibitors. Extreme pressure agents include phosphate esters such as triphenyl phosphate, triaryl phosphate, and tricresyl phosphate, azole compounds such as benzotriazole and dialkyl mercaptothiadiazole, fatty acids obtained by decomposing and modifying fats and oils derived from animals and plants, mono- and di-glyceride, polyalcohol such as glycerine, alkyd resins, hydrogenated oils, chlorinated oils, sulfurized fats and oils, sulfurized olefin, and thiophosphoric acid. Oiliness agents include fats and oils such as beef tallow, lard, fish oil, castor oil, palm oil, soybean oil, and rapeseed oil, which are obtained from animals and plants, ester such as trimethylolpropane oleate, pentaerythritol stearate, dioctyl sebacate, dioctyl adipate, dioctyl phthalate, and dibutyl phthalate, higher alcohol such as cetyl alcohol, stearyl alcohol, and oleyl alcohol.

Any of these optional additives is present in, for example, an amount of 0.1 to 7.0 mass %, preferably 0.3 to 5.0 mass %, and more preferably 0.5 to 4.0 mass %, based on the total mass of the composition.

It goes without saying that the compositions of the present invention exhibit their performance most effectively when employed as the grease composition for a constant-velocity joint. However, they exhibit their performance more effectively when employed for a sliding type constant-velocity joint (i.e., a plunging type constant-velocity joint). Furthermore, they exhibit their performance even more effectively when employed for a sliding type tripod constant-velocity joint.

### Examples

Grease compositions of Examples and Comparative Examples were prepared using components described below. Specifically, 1 mol of 4',4-diphenylmethanediisocyanate was reacted with 2 mol of a given amine in a base oil, and the resulting mixture was heated followed by cooled, then kneaded by a triple roll mill, giving a base grease. Additives were added to the mixture with the proportion described in Table 1 or Table 2, in which the number is a mass % based on the total mass of the composition, and the base oil was further added to achieve the proportion of the amount of a thickener described in Table 1 or Table 2, followed by dispersion by the triple roll mill, thereby obtaining the grease compositions of Examples and Comparative Examples. The penetration was determined according to JIS K2220 7. and set to 325.
<Base Oil>
   - Mineral oil (kinematic viscosity at 100°C = 11.00 mm²/s)
<Thickener>
   - An aliphatic diurea was prepared as an amine using octylamine:octadecylamine = 5:5.
<Additives>
   - (c) MoDTC (solid):molybdenum dithiocarbamate in the form of a solid
(ADEKA SAKURA-LUBE 600, manufactured by ADEKA
   - (d) MoDTC (liquid): molybdenum dithiocarbamate in the form of a liquid
(MOLYVAN 822, manufactured by Vanderbilt)
   - (d) MoDTP (liquid): molybdenum dithiophosphate
(ADEKA SAKURA-LUBE 300, manufactured by ADEKA)
   - (e) Ca phenate: calcium phenate
(OLOA218A, manufactured by Chevron Japan, base number: 150 mgKOH/g)
   - (f) Ca sulfonate: calcium sulfonate
(ALOX2292B, manufactured by Lubrizol, base number: 3.0 mgKOH/g)
   - (g) SP: organic sulfur phosphorus compound
(LUBRIZOL810, manufactured by Lubrizol, the amount of S: 31.5%, the amount of P: 1.7%, the principal sulfur compound: sulfurized olefin, the principal phosphorus compound: phosphate ester amine salt)
   - PS: phosphorothioate
(IRGALUBE211, manufactured by BASF, the amount of S: 4.4%, the amount of P: 4.3%)

Each grease compositions of Examples and Comparative Examples were tested according to methods described below. Table 1 shows test results of Examples, and Table 2 shows test results of Comparative Examples. Comparative Example 7 and Comparative Example 8 correspond to Example 1 and 4 of JP 2004-323672 A, respectively.

### <SRV test, the evaluation of high-temperature frictional characteristics>

A comparative evaluation was conducted by calculating the arithmetical mean of coefficient of friction during 10 seconds from 890 to 900 seconds of the test duration.

### · Test conditions

Contact pressure: 2.2 GPa
Stroke: 3.3 mm
Frequency: 4.3 Hz
Test duration: 900 seconds
Test temperature: 100°C
Ball: 17.5 mm
Plate: surface roughness Rz = 1.5 µm
[Evaluation]
○(Pass): The arithmetical mean of coefficient of friction < 0.040
×(Fail): The arithmetical mean of coefficient of friction ≧ 0.040

At the time when the coefficient of friction got over 0.20 during the test, a judgement of seizure was made, leading to Fail.

### <Measurement of dropping point, evaluation of heat resistance>

- Test method: according to JIS K 2220 8.

**Table 1**

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| (a) Thickener | Aliphatic diurea % | 6 | 6 | 6 | 6 | 6 | 6 | 6 | 6 | 6 | 6 | 6 |
| (b) Base oil | Mineral oil | balance | balance | balance | balance | balance | balance | balance | balance | balance | balance | balance |
| | 100°C kinematic viscosity (mm²/s) | 11 | 11 | 11 | 11 | 11 | 11 | 11 | 11 | 11 | 11 | 11 |
| Additive % | (c) MoDTC(solid) | 0.75 | 0.75 | 0.75 | 0.75 | 0.75 | 0.75 | 0.75 | 0.75 | 0.75 | 0.75 | 0.75 |
| | (d) MoDTC(liquid) | 2.25 | 2.55 | 3 | 3.60 | | 3 | 3 | 3 | 3 | 3 | 2.55 |
| | (d) MoDTP(liquid) | | | | | 1.95 | | | | | | |
| | (e) Ca phenate | 2 | 2 | 2 | 2 | 2 | 2 | 2 | 2 | 2 | 2 | 2 |
| | (f) Ca sulfonate | 3 | 3 | 3 | 3 | 3 | 2 | 4 | 6 | 3 | 3 | 3 |
| | (g) SP | 0.15 | 0.15 | 0.15 | 0.15 | 0.15 | 0.15 | 0.15 | 0.15 | 0.15 | 0.20 | 0.10 |
| | PS | 0.5 | 0.5 | 0.5 | 0.5 | 0.5 | 0.5 | 0.5 | 0.5 | | 0.5 | 0.5 |
| | Mass ratio of (d) to (c) | 3.0 | 3.4 | 4.0 | 4.8 | 2.6 | 4.0 | 4.0 | 4.0 | 4.0 | 4.0 | 3.0 |
| | Mass ratio of (f) to (e) | 1.5 | 1.5 | 1.5 | 1.5 | 1.5 | 1.0 | 2.0 | 3.0 | 1.5 | 1.5 | 1.5 |
| SRV test | coefficient of friction | 0.034 | 0.036 | 0.032 | 0.036 | 0.034 | 0.035 | 0.036 | 0.034 | 0.033 | 0.032 | 0.034 |
| | judgement | ○ | ○ | ○ | ○ | ○ | ○ | ○ | ○ | ○ | ○ | ○ |
| Dropping point | °C | - | - | 228 | 230 | - | 230 | 210 | 190 | - | 229 | - |

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| (a) Thickener | Aliphatic diurea % | 6 | 6 | 6 | 6 | 6 | 6 | 6 | 6 |
| (b) Base oil | Mineral oil | balance | balance | balance | balance | balance | balance | balance | balance |
| | 100°C kinematic viscosity (mm²/s) | 11 | 11 | 11 | 11 | 11 | 11 | 11 | 11 |
| Additive % | (c) MoDTC(solid) | 0.75 | 0.75 | 0.75 | 0.75 | 0.75 | 0.75 | 3 | 3 |
| | (d) MoDTC(liquid) | | 1.8 | 3 | 3 | 3 | 3 | 3 | 3 |
| | (d) MoDTP(liquid) | | | | | | | | |
| | (e) Ca phenate | 2 | 2 | | 2 | 2 | 2 | 3 | 3 |
| | (f) Ca sulfonate | 3 | 3 | 3 | 3 | 3 | 3 | 3 | 3 |
| | (g) SP | 0.15 | 0.15 | 0.15 | | 0.4 | 1 | 0.5 | |
| | PS | 0.5 | 0.5 | 0.5 | 0.5 | 0.5 | 0.5 | 1 | 1 |
| | Mass ratio of (d) to (c) | 0.0 | 2.4 | 4.0 | 4.0 | 4.0 | 4.0 | 1.0 | 1.0 |
| | Mass ratio of (f) to (e) | 1.5 | 1.5 | 0.0 | 1.5 | 1.5 | 1.5 | 1.0 | 1.0 |
| SRV test | coefficient of friction | > 0.2 | > 0.2 | > 0.2 | 0.047 | 0.048 | 0.12 | 0.057 | 0.058 |
| | judgement | × | × | × | × | × | × | × | × |
| Dropping point | °C | - | - | - | - | - | - | - | - |

## Claims

1. A grease composition for a constant-velocity joint, comprising
(a) a diurea-based thickener represented by formula (1):
R¹NH-CO-NH-C₆H₄-p-CH₂-C₆H₄-p-NH-CO-NHR² (1)
wherein R¹ and R² are independently an alkyl group having 8 to 18 carbon atoms;
(b) a base oil;
(c) a molybdenum dithiocarbamate in the form of a solid at 25°C;
(d) at least one member selected from the group consisting of a molybdenum dithiocarbamate in the form of a liquid at 25°C and a molybdenum dithiophosphate in the form of a liquid at 25°C;
(e) a calcium phenate;
(f) a calcium sulfonate; and
(g) an organic sulfur phosphorus compound,
wherein a ratio by mass of (c) and (d) is in the range of (c):(d)=1:2.6 to 1:5.2,
and (g) is present in an amount of 0.05 to 0.30 mass % based on the total mass of the composition.

2. The grease composition for the constant-velocity joint of claim 1, wherein (d) is present in an amount of 1.95 to 3.90 mass % based on the total mass of the composition.

3. The grease composition for the constant-velocity joint of claim 1, wherein a ratio by mass of (e) and (f) is in the range of (e):(f)=1:1 to 1:3.

4. The grease composition for the constant-velocity joint of claim 1, wherein (f) is present in an amount of 2.0 to 6.0 mass % based on the total mass of the composition.

5. The grease composition for the constant-velocity joint of any one of claims 1 to 4 which is used for a sliding type constant-velocity joint.

6. A sliding type tripod constant-velocity joint in which the grease composition for the constant-velocity joint of any one of claims 1 to 4 is enclosed.
